Europäisches Patentamt

European Patent Office

Office européen des brevets

(11) Veröffentlichungsnummer: **0 500 981 A1**

## EUROPÄISCHE PATENTANMELDUNG

(21) Anmeldenummer: **91102889.2**

(51) Int. Cl.5: **F16B 19/10**

(22) Anmeldetag: **28.02.91**

(43) Veröffentlichungstag der Anmeldung:
**02.09.92 Patentblatt 92/36**

(84) Benannte Vertragsstaaten:
**AT BE CH DE ES FR GB IT LI NL SE**

(71) Anmelder: **MASCHINENBAU SUBOTSCH & SCHWAB GMBH**
**Weiherstrasse 4**
**W-6204 Taunusstein 4(DE)**

(72) Erfinder: **Schwab,Manfred**
**Adolfstrasse 4B**
**W-6204 Taunusstein 4(DE)**

(74) Vertreter: **Blumbach Weser Bergen Kramer Zwirner Hoffmann Patentanwälte**
**Sonnenberger Strasse 100**
**W-6200 Wiesbaden 1(DE)**

(54) **Blindniete und Gerät zum Setzen von Blindnieten.**

(57) Bei einer Blindniete (1) mit einem Blindnietkörper, der aus einem Nietkopf (2) mit angeformtem Hohlschaft (3) besteht, durch den sich ein Nietstift (4) erstreckt, der ein Verdickungsteil trägt, das am Ende des Hohlschaftes außerhalb des Nietkörpers angeordnet ist, weist das dem Nietkopf (2) abgewandte Ende des Nietstiftes (4) im Bereich des beim Setzvorgang angreifenden Spannfutters (10) ein sich zum Nietkopf (2) hin verjüngendes Teil, vorzugsweise ein Konusteil, (5) auf. Ein Gerät zum Setzen einer derartigen Blindniete (1) besitzt ein Spannfutter (10), das während des Nietsetzvorgangs am Konusteil (5) der Blindniete (1) angreift, wobei die angreifende Fläche des Spannfutters in Zugrichtung, angepaßt an das Konusteil (5), von innen nach außen verläuft.

Fig. 2

Die Erfindung betrifft eine Blindniete mit einem Blindnietkörper, der aus einem Nietkopf mit angeformtem Hohlschaft besteht, durch den sich ein Nietstift erstreckt, der ein Verdickungsteil trägt, das am Ende des Hohlschaftes außerhalb des Nietkörpers angeordnet ist.

Derartige Blindnieten werden dadurch gesetzt, daß das Blindnietsetzgerät an den Nietstift angreift und diesen zurückzieht, wodurch der Hohlschaft des Blindnietkörpers gestaucht wird und die zu verbindenden Werkstücke festgelegt werden. Ist der Nietvorgang abgeschlossen, wird die ausgeübte Kraft so stark, daß an einer am Nietstift vorgesehenen Einkerbung bzw. Ausnehmung dieser abreißt. Die hohen, an dem Nietstift angreifenden Kräfte machen es erforderlich, daß die Spannbakken Erhebungen besitzen, um bei der Übertragung der Kräfte auf den Nietstift nicht abzurutschen. Bei Nieten aus hartem Material, wie z. B. bei Edelstahlnieten, tritt ein sehr hoher Verschleiß an den Erhebungen der Spannbacken auf, und besonders bei weichen Nieten, z. B. Alumniumnieten, entsteht ein sehr hoher Materialabrieb. Die feinen Materialteilchen gelangen in das Gerät, das dadurch in seiner Funktion beeinträchtigt, wenn nicht funktionsuntüchtig wird und gesäubert werden muß.

Der Erfindung liegt daher die Aufgabe zugrunde, eine Blindniete und ein dazu passendes Gerät zum Setzen von Blindnieten verfügbar zu machen, bei dem ein hoher Verschleiß an den Spannbacken und ein nachteiliger Materialabrieb an den Nietstiften vermieden ist.

Die Lösung dieser Aufgabe besteht darin, daß bei einer Blindniete der eingangs genannten Art dasdem Nietkopf abgewandte Ende des Nietstiftes im Bereich des beim Setzvorgang angreifenden Spannfutters ein sich zum Nietkopf hin verjüngendes Teil, vorzugsweise ein Konusteil, aufweist.

Zweckmäßig ist das Konusteil ein integriertes Teil des Nietstiftes. Es kann aber auch von Vorteil sein, daß das Konusteil ein selbständiges Teil darstellt und mit dem Nietstift verbunden ist.

In ihrer weiteren Ausbildung schlägt die Erfindung vor, daß am hinteren Ende des Konusteiles ein Endteil mit einem Außendurchmesser vorgesehen ist, der dem Außendurchmesser des Nietstiftes entspricht. Eine Weiterbildung der Erfindung zeichnet sich dadurch aus, daß am hinteren Ende des Konus ein Vorsprung vorgesehen ist, wobei zweckmäßig das Endteil den Vorsprung bildet.

Die Erfindung macht gleichermaßen ein Gerät zum Setzen dieser Blindnieten verfügbar mit der Besonderheit, daß das Spannfutter während des Nietsetzvorganges am Konusteil des Blindniets angreift. Eine vorteilhafte Ausführungsform des Gerätes besteht darin, daß die innere, an der Blindniete angreifende Fläche des Spannfutters in Zugrichtung, angepaßt an das Konusteil, von innen nach außen verläuft.

Gemäß einer Weiterbildung sieht die Erfindung vor, daß die am Konusteil angreifende Arbeitsfläche des Spannfutters an der dem Ende des Nietstiftes zugewendeten Seite eine Mitnehmerkante aufweist.

Die Erfindung soll nachstehend anhand eines Ausführungsbeispieles näher erläutert werden.

In den Zeichnungen zeigen:

Fig. 1 eine erfindungsgemäße Blindniete mit Nietstift und

Fig. 2 eine Teilansicht eines Gerätes zum Setzen einer Blindniete nach Fig. 1 im Schnitt.

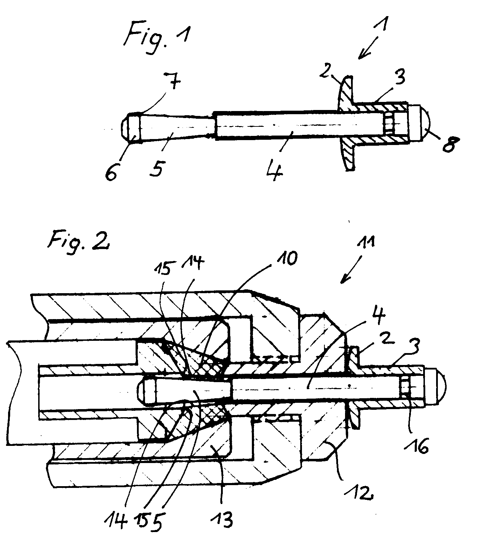

In Fig. 1 ist eine Blindniete 1 dargestellt mit einem Nietkopf 2 und einem daran angeformten Hohlkörper 3, durch den sich ein Nietstift 4 erstreckt, der ein Verdickungsteil 8 aufweist, das am Ende des Hohlschaftes 3 außerhalb des Nietkörpers angeordnet ist. Das dem Nietkopf 2 abgewandte Ende des Nietstiftes 4 weist ein Konusteil 5 auf, das sich in dem Bereich befindet, in dem beim Setzvorgang das Spannfutter 10 eines in Fig. 2 teilweise dargestellten Blindnietsetzgerätes 11 angreift. Die Fläche des Konusteiles 5 verjüngt sich zum Nietkopf 2 hin. Statt der runden Konusflächen können auch nicht dargestellte, schräg verlaufende Seitenflächen am Nietstift 4 vorgesehen sein. Das Konusteil 5 ist zweckmäßig als integriertes Teil des Nietstiftes 4 ausgebildet. Das Konusteil 5 kann mit Vorteil jedoch ein selbständiges Teil darstellen und mit dem Nietstift 4 verbunden sein, beispielsweise durch einen Preßsitz. Am hinteren Ende des Konusteils 5 ist ein Endteil 6 vorgesehen mit einem Außendurchmesser, der dem Außendurchmesser des Nietstiftes 4 entspricht. In einer vorteilhaften Weiterbildung ist am hinteren Ende des Konusteils 5 ein Vorsprung 7 vorgesehen, wobei zweckmäßig das Endteil 6 den Vorsprung 7 bildet. Wie Fig. 2 zeigt, greift beim Nietsetzvorgang das Spannfutter 10 am Konusteil 5 an, während der Nietstift 4 im Mundstück 12 des Blindnietsetzgerätes ruht. Wie weiter die Fig. 2 zeigt, verläuft die innere, an der Blindniete 1 angreifende Fläche 14 des Spannfutters 10 in Zugrichtung, angepaßt an das Konusteil 5, von innen nach außen. Weiter weist die am Konusteil 5 angreifende Arbeitsfläche 14 an der am Ende des Nietstiftes zugewandten Seite eine Mitnehmerkante 15 auf. Bei nicht ausreichendem Anklemmdruck kann so die Mitnehmerkante 15 mit dem Vorsprung 7 in Eingriff kommen, wodurch die Kraftübertragung verbessert wird.

Wenn das Zugteil 13 in Fig. 2 nach links eine Kraft auf das Spannfutter 10 ausübt, übertragen die schräg verlaufenden Arbeitsflächen 14 die Kraft auf den Konusteil 5 des Nietstiftes 4, wodurch der Stauchvorgang des Hohlkörpers 3 und damit der Nietsetzvorgang ausgelöst wird, bis der Nietstift 4 bei 16 abreißt. Die so bewirkte günstige Kraftübertragung auf den Nietstift 4 über das Konusteil 5 vermeidet einen erhöhten Verschleiß des Spannfutters 10 und einen Abrieb von Material am Konusteil 5 des Nietstiftes 4.

**Patentansprüche**

1. Blindniete mit einem Blindnietkörper, der aus einem Nietkopf mit angeformtem Hohlschaft besteht, durch den sich ein Nietstift erstreckt, der ein Verdickungsteil trägt, das am Ende des Hohlschaftes außerhalb des Nietkörpers angeordnet ist,
dadurch gekennzeichnet,
daß das dem Nietkopf (2) abgewandte Ende des Nietstiftes (4) im Bereich des beim Setzvorgang angreifenden Spannfutters (10) ein sich zum Nietkopf (2) hin verjüngendes Teil, vorzugsweise ein Konusteil (5), aufweist.

2. Blindniete nach Anspruch 1,
dadurch gekennzeichnet, daß das Konusteil (5) ein integriertes Teil des Nietstiftes (4) ist.

3. Blindniete nach Anspruch 1,
dadurch gekennzeichnet, daß das Konusteil (5) ein selbständiges Teil darstellt und mit dem Nietstift (4) verbunden ist.

4. Blindniete nach einem der Ansprüche 1 bis 3,
dadurch gekennzeichnet, daß am hinteren Ende des Konusteiles (5) ein Endteil (6) mit einem Außendurchmesser vorgesehen ist, der dem Außendurchmesser des Nietstiftes (4) entspricht.

5. Blindniete nach einem der Ansprüche 1 bis 4,
dadurch gekennzeichnet, daß am hinteren Ende des Konusteils (5) ein Vorsprung (7) vorgesehen ist.

6. Blindniete nach Anspruch 5,
dadurch gekennzeichnet, daß das Endteil (6) den Vorsprung (7) bildet.

7. Blindniete nach einem der Ansprüche 1 bis 6,
dadurch gekennzeichnet, daß mehrere schräg verlaufende Seitenflächen am Nietstift (4) im Bereich des beim Setzvorgang angreifenden Spannfutters (10) vorgesehen sind.

8. Gerät zum Setzen von Blindnieten nach einem der Ansprüche 1 bis 7,
dadurch gekennzeichnet, daß das Spannfutter (10) während des Nietsetzvorganges am Konusteil (5) des Blindniets (1) angreift.

9. Gerät nach Anspruch 8,
dadurch gekennzeichnet, daß die innere, am Nietstift (4) angreifende Fläche (14) des Spannfutters (10) in Zugrichtung, angepaßt an das Konusteil (5), von innen nach außen verläuft.

10. Gerät nach Anspruch 8 oder 9,
dadurch gekennzeichnet, daß die am Konusteil (5) angreifende Arbeitsfläche (14) des Spannfutters (10) an der dem Ende des Nietstiftes (4) zugewendeten Seite eine Mitnehmerkante (15) aufweist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 418 368 (NIFCO)<br>* Seite 8, Zeilen 4-12; Figuren 4a,b *<br>--- | 1,2,4-6,8 | F 16 B 19/10 |
| A | US-A-3 521 521 (J.O. KING et al.)<br>* Spalte 3, Zeilen 33-36; Figur 1 *<br>--- | 1,2,8 | |
| A | US-A-3 357 094 (P.W. MOUCK)<br>* Ansprüche 1,9; Figuren 1,3,4,6 *<br>----- | 1,8 | |

RECHERCHIERTE SACHGEBIETE (Int. Cl.5)

F 16 B

Der vorliegende Recherchenbericht wurde für alle Patentansprüche erstellt

| Recherchenort | Abschlußdatum der Recherche | Prüfer |
|---|---|---|
| BERLIN | 16-10-1991 | WESTERMAYER W G |

EPO FORM 1503 03.82 (P0403)